# FASCICULE DE BREVET EUROPEEN

(11) **EP 2 435 706 B1**
(45) Date de publication et mention de la délivrance du brevet: **20.05.2020**
(21) Numéro de dépôt: 10724011.1
(22) Date de dépôt: 25.05.2010
(51) Int. Cl.: F04C 18/02, F04C 25/00, B60C 23/04, F04C 23/02

(54) **MICROSYSTEMES DE TRANSFORMATION DE PRESSIONS ET DE COMPRESSION**
MIKROSYSTEME ZUR UMWANDLUNG VON DRÜCKEN UND KOMPRESSION
MICROSYSTEMS FOR CONVERTING PRESSURES AND COMPRESSION

(30) Priorité: 25.05.2009 FR 0953412
(43) Date de publication de la demande: 04.04.2012
(73) Titulaire: Commissariat à l'Énergie Atomique et aux Énergies Alternatives, 75015 Paris (FR)
(72) Inventeur: HILT, Thierry, F-38530 Barraux (FR)
(74) Mandataire: Colombo, Michel
(86) Numéro de dépôt international: PCT/EP2010/057190
(87) Numéro de publication internationale: WO 2010/136472

(56) Documents cités:
- EP-A- 0 520 271
- EP-A2- 1 221 758
- EP-A2- 2 039 940
- WO-A-01/25137
- JP-A- H01 219 378
- US-A1- 2004 126 254
- US-A1- 2006 010 871
- US-A1- 2006 183 015
- US-A1- 2006 231 237
- US-B1- 6 368 065

## Description

L'invention concerne un microsystème de transformation d'une énergie pneumatique provenant d'une différence de pressions dans un fluide en un déplacement mécanique. Elle concerne également un microsystème de compression d'un fluide. Elle a également pour objet un capteur, une roue, une puce électronique, un micromoteur et une pile à combustible incorporant l'un de ces microsystèmes. Enfin, elle a également pour objet un procédé de fabrication de ces microsystèmes.

Les microsystèmes sont, par exemple, des MEMS (Micro-ElectroMechanical Systems). Ces microsystèmes diffèrent des systèmes mécaniques macroscopiques en outre par leur procédé de fabrication. Ces microsystèmes sont réalisés en utilisant les mêmes procédés de fabrication collectifs que ceux utilisés pour réaliser les puces microélectroniques. Par exemple, les microsystèmes sont réalisés à partir de plaquette en silicium monocristallin ou en verre usinées par photolithographie et gravure (par exemple DRIE (Deep Reactive Ion Etching)) et/ou structurées par croissance épitaxiale et dépôt de matériau métallique.

Grâce à ces procédés de fabrication, les microsystèmes sont petits et présentent généralement des pièces ou parties de pièces usinées dont au moins une des dimensions est d'ordre micrométrique. La dimension d'ordre micrométrique est généralement inférieure à 200 µm et, par exemple, comprise entre 1 et 200 µm.

Par exemple, l'ONERA a développé des microturbines pour transformer un écoulement liquide en déplacement mécanique. Un autre microsystème pour réaliser la même fonction est par exemple divulgué dans la demande WO 03 056 691 ou dans la demande WO 2006/095039.

De l'état de la technique est également connu de : US2004/126254A1, US6368065B1, EP0250271A1, US2006/231237A1, US2006/183015A1, WO01/25137A, EP2039940A2, EP1221758A2, JPH01219378A, US2006010871A1.

EP1221758A2 est considéré comme décrivant les plus des caractéristiques du préambule des revendications 1 et 3.

Les microsystèmes divulgués sont capables de transformer une différence de pressions en un déplacement mécanique. Toutefois, ils présentent un certain nombre d'inconvénients.

Certains de ces microsystèmes nécessitent une pièce montée à rotation, généralement appelée rotor. Le rotor tourne par rapport à une autre pièce immobile généralement appelée stator. Le rotor est par exemple une microturbine. Un tel mouvement de rotation du rotor entraîne des pertes par frottement qui peuvent être importantes, ce qui réduit le rendement énergétique du microsystème. Par rendement énergétique, on désigne le rapport entre l'énergie mécanique produite et l'énergie apportée au microsystème sous forme d'un débit de fluide ou d'une différence de pressions.

De plus, la réalisation d'un microsystème équipé d'une pièce en rotation est complexe et nécessite souvent l'empilement de nombreuses tranche semiconductrice ou « Wafer » pour arriver à le fabriquer.

Enfin, les microsystèmes connus atteignent un bon rendement énergétique uniquement pour des débits de fluide élevés. Au contraire, pour des débits faibles ou très faibles de fluide, le rendement est dégradé.

L'invention vise à remédier à au moins l'un de ces inconvénients.

Elle a donc pour objet un microsystème de transformation d'une différence de pressions en un déplacement mécanique conforme à la revendication 1.

Les modes de réalisation de ce microsystème de transformation peuvent comporter la caractéristique suivante :
▪ le microsystème comporte au moins un transducteur apte à convertir l'énergie mécanique produite par le déplacement des bras en une autre énergie.

L'invention a également pour objet un microsystème de compression d'un fluide conforme à la revendication 3.

Les microsystèmes ci-dessus présentent un très bon rendement énergétique même pour des débits de fluide très faibles.

De plus, puisque les bras définissent une poche de fluide qui s'éloigne de la buse d'entrée au cours de son déplacement, il n'est pas nécessaire de prévoir un clapet anti-retour au niveau de la buse d'entrée.

De façon similaire, puisque les bras définissent une poche de fluide qui est initialement éloignée de la buse de sortie, il n'est pas non plus nécessaire de prévoir un clapet anti-retour au niveau de la buse de sortie.

Enfin, le fait que les bras soient reliés à un même plan permet de fabriquer les deux bras imbriqués l'un dans l'autre simultanément. Il n'est donc plus nécessaire de fabriquer séparément les deux bras puis de venir les emboîter l'un dans l'autre.

Les modes de réalisation de ces microsystèmes peuvent comporter une ou plusieurs des caractéristiques des revendications dépendantes.

Les modes de réalisation de ces microsystèmes présentent en outre les avantages suivants :
- le fait que les bras se déplacent uniquement en translation dans un même plan simplifie la réalisation du microsystème puisqu'il n'est pas nécessaire d'avoir recours à de nombreux empilements de tranches semiconductrices successives,
- l'utilisation d'un déphaseur mécanique limite la consommation d'énergie du microsystème par rapport au cas où ce déphasage serait uniquement obtenu en commandant des transducteurs électromécaniques,
- le fait de travailler à la fréquence de résonance permet de décroître l'énergie consommée.

L'invention a également pour objet un capteur d'une différence de pressions entre un fluide comprimé et un fluide détendu. Ce capteur comporte :
- le microsystème ci-dessus de transformation d'une différence de pression en un déplacement mécanique, dans lequel les buses d'entrée et de sortie sont fluidiquement raccordées aux fluides comprimé et détendu, et
- un transducteur apte à convertir l'énergie mécanique des déplacements des bras sous l'action du fluide qui se détend en s'écoulant de la buse d'entrée vers la buse de sortie, en une grandeur physique représentative de la différence de pressions.

Les modes de réalisation de ce capteur peuvent comporter une ou plusieurs des caractéristiques suivantes :
▪ le transducteur est un transducteur électromécanique propre à convertir l'énergie mécanique de déplacement des bras en énergie électrique utilisée en plus pour alimenter le capteur ;
▪ le capteur comprend un émetteur sans fil propre à transmettre une grandeur représentative de la différence de pressions mesurée à un récepteur distant par l'intermédiaire d'une liaison sans fil, cet émetteur étant alimenté uniquement à partir de l'énergie électrique produite par le transducteur électromécanique.

Les modes de réalisation de ce capteur présentent en outre les avantages suivants :
- l'utilisation d'un transducteur électromécanique permet, en plus d'obtenir une grandeur représentative de la différence de pressions mesurée, d'alimenter un émetteur sans fil.

L'invention a également pour objet une puce électronique comportant :
- un réseau de microcanaux dans lesquels circule un fluide caloporteur compressible, ces microcanaux s'étendant entre une bouche d'entrée et une bouche de sortie dans l'épaisseur de la puce électronique pour la refroidir, et
- le microsystème de compression ci-dessus, dans lequel les buses de sortie et d'entrée sont fluidiquement raccordées, respectivement, aux bouches d'entrée et de sortie des microcanaux, ces microcanaux formant un détendeur.

L'invention a également pour objet un micromoteur à combustion comprenant :
- un canal d'admission d'un mélange inflammable de carburant et de comburant, et
- au moins le microsystème ci-dessus pour comprimer ce mélange avant sa combustion ou pour détendre des gaz d'échappement résultant de la combustion de ce mélange.

L'invention a également pour objet une pile à combustible comportant :
- le micromoteur ci-dessus propre à transformer la combustion d'un mélange de carburant et de comburant en un déplacement mécanique, et
- un transducteur électromécanique apte à convertir le déplacement mécanique en énergie électrique d'alimentation d'une charge électrique qui est raccordée à la pile.

L'invention a également pour objet une pile comportant :
- un réservoir de fluide comprimé,
- le microsystème ci-dessus dans lequel les buses d'entrée et de sortie sont fluidiquement raccordées aux fluides comprimé et détendu, ce microsystème étant propre à transformer la détente du fluide comprimé en un déplacement mécanique, et
- un transducteur électromécanique apte à convertir le déplacement mécanique en énergie électrique d'alimentation d'une charge électrique qui est raccordée à la pile.

Enfin, l'invention a également pour objet un procédé de fabrication d'un des microsystèmes ci-dessus, ce procédé comportant le dépôt simultané sur un substrat ou la gravure simultanée dans un substrat des bras imbriqués l'un dans l'autre.

L'invention sera mieux comprise à la lecture de la description qui va suivre, donnée uniquement à titre d'exemple non limitatif et faite en se référant aux dessins sur lesquels :
- la figure 1 est un schéma de principe d'un microsystème de transformation d'une différence de pressions dans un fluide en un déplacement mécanique,
- la figure 2 est un graphe montrant le déplacement de bras du microsystème de la figure 1 en fonction du temps,
- la figure 3 est une illustration schématique du fonctionnement du microsystème de la figure 1,
- la figure 4 est une illustration schématique d'un mode de réalisation possible du microsystème de la figure 1,
- la figure 5 est un organigramme d'un procédé de fabrication du microsystème de la figure 1,
- les figures 6 à 8 sont des illustrations schématiques et en coupe de différentes étapes du procédé de fabrication du microsystème de la figure 1,
- la figure 9 est une illustration schématique d'un capteur de différence de pressions incorporant le microsystème de la figure 1,
- la figure 10 est une illustration en coupe partielle d'une roue incorporant le capteur de la figure 9,
- la figure 11 est une illustration schématique et en coupe d'une valve de la roue de la figure 10,
- la figure 12 est une illustration schématique d'une pile à combustible incorporant un micromoteur utilisant le microsystème de la figure 1, et
- la figure 13 est une illustration schématique et en coupe d'une puce électronique incorporant un microsystème de compression similaire au microsystème de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail.

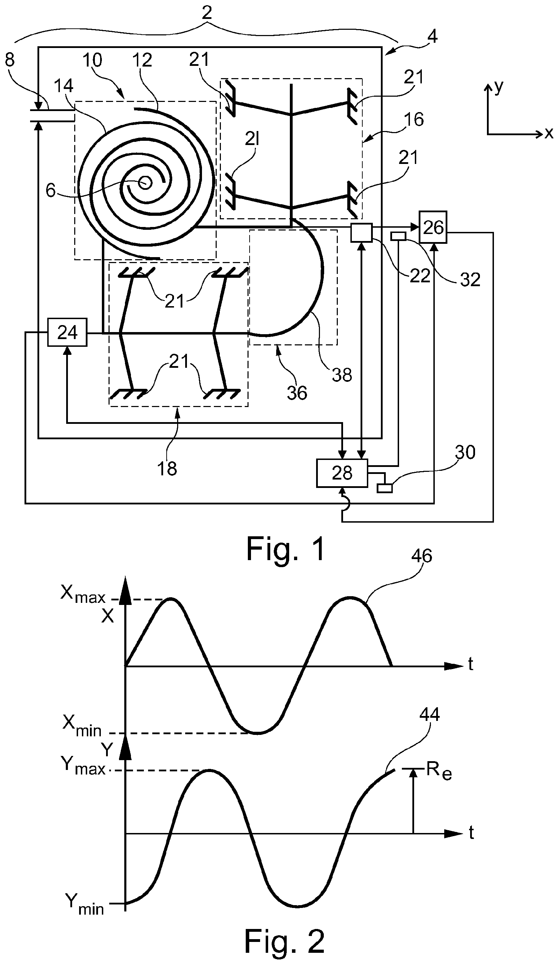

La figure 1 représente un microsystème de transformation d'une différence de pressions dans un fluide en un déplacement mécanique. Le fluide est un fluide compressible. Par exemple, le fluide est un gaz.

Le microsystème 2 comprend une enceinte close 4 fluidiquement raccordée au fluide comprimé par l'intermédiaire d'une buse d'entrée 6 et fluidiquement raccordée au fluide détendu par l'intermédiaire d'une buse de sortie 8. L'enceinte 4 est hermétiquement scellée de manière à ce que le fluide détendu dans cette enceinte ne puisse pas s'échapper par d'autres issues que la buse 8.

A l'intérieur de l'enceinte 4, la buse 6 est fluidiquement raccordée à un détendeur à rouleau 10. Le détendeur à rouleau est également connu sous le terme de détendeur « Scroll ».

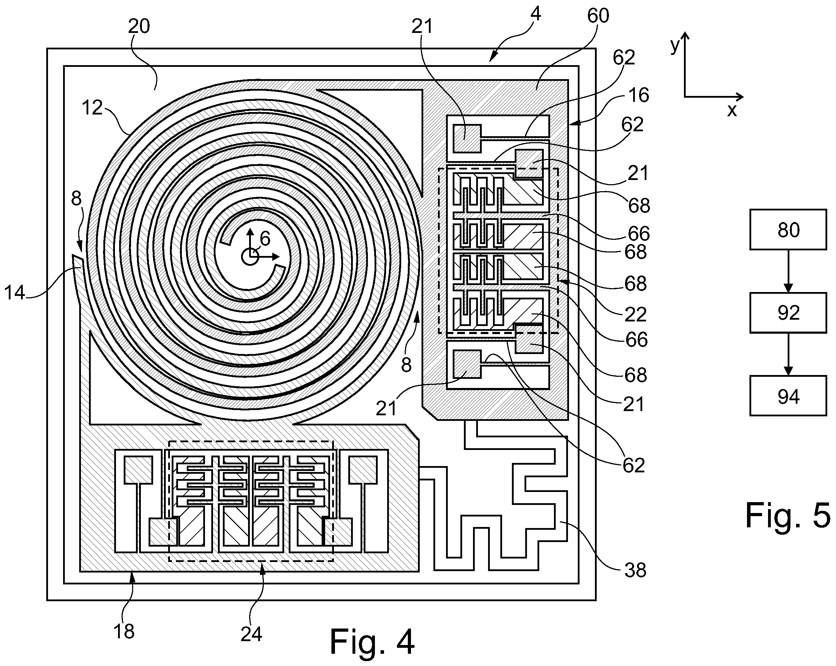

Le détendeur 10 est formé de deux bras articulés l'un par rapport à l'autre 12 et 14. Les bras 12 et 14 sont conformés et articulés de manière à ce qu'au cours de leur déplacement sous l'effet du fluide admis par la buse 6, ils définissent au moins une poche de fluide qui s'éloigne de la buse 6 pour ensuite se rapprocher de la buse 8 en augmentant en même temps de volume. Par exemple, les bras 12 et 14 sont conformés en spirale et sont imbriqués l'un dans l'autre. Chaque spirale comporte au moins un tour voire plusieurs tours pour définir plusieurs poches de fluide qui se déplacent en même temps de la buse 6 vers la buse 8. Chaque bras est mécaniquement raccordé par l'intermédiaire d'articulations respectives 16 et 18 à un plan fixe 20 (Figure 4). Pour simplifier la figure 1, seuls des points d'ancrage 21 au plan 20 sont représentés sur cette figure. Le plan 20 s'étend parallèlement à des directions X et Y orthogonales. De préférence, les articulations 16 et 18 sont élastiques. Le plan 20 retient le fluide entre les bras 12, 14 tout en permettant aux bras 12, 14 de se déplacer le long de sa face supérieure. A cet effet, il existe un jeu entre la face supérieur du plan 20 et les bras 12, 14. Ce jeu est suffisamment étroit pour limiter les fuites de fluide par son intermédiaire.

Un plan supérieur (non représenté) est disposé de façon similaire de l'autre côté des bras 12, 14 pour retenir le fluide entre les bras 12, 14 tout en permettant aux bras 12, 14 de se déplacer le long de sa face inférieure.

Les articulations 16 et 18 permettent uniquement un déplacement en translation des bras 12 et 14 le long, respectivement, des directions Y et X.

Chaque bras 12, 14 est également mécaniquement raccordé à un transducteur électromécanique respectif 22, 24. Chaque transducteur électromécanique est apte à convertir le mouvement mécanique du bras en énergie électrique.

Par exemple, chacun de ces transducteurs 22, 24 est raccordé en sortie à un dispositif 26 de stockage d'énergie électrique. Par exemple, le dispositif 26 est un condensateur.

Les transducteurs 22 et 24 sont des transducteurs électromécaniques commandables de manière à régler la quantité d'énergie mécanique transformée en énergie électrique. Ils remplissent donc également la fonction d'amortisseur commandable.

Ces transducteurs 22 et 24 sont commandés par une unité de commande 28. L'unité 28 est raccordée à des capteurs 30 et 32 d'une grandeur physique représentative de la puissance électrique produite, respectivement, par les transducteurs 24 et 22. Les capteurs 30 et 32 permettent aussi de mesurer la phase de la puissance électrique produite.

Un déphaseur mécanique 36 est mécaniquement raccordé entre les bras 12 et 14. Ce déphaseur a pour fonction d'aider mécaniquement à la réalisation d'un déphasage de π/2 radians entre les mouvements d'oscillations (va-et-vient) des bras 12 et 14. De plus, ce déphaseur 36 est formé d'un ressort 38 mécaniquement raccordé aux bras 12 et 14. Par exemple, ce ressort 38 est une lame ressort. Ce ressort 38 transforme le système formé par les deux bras 12 et 14 et le ressort 38 en un système résonant pour une fréquence de résonance. La fréquence de résonance est atteinte quand le déphasage entre les mouvements d'oscillations des bras 12, 14 est de π/2 radians. A la fréquence de résonance, le rendement énergétique du microsystème est maximal.

L'unité 28 est apte à commander les transducteurs 22 et 24 pour travailler à la fréquence de résonance. Par exemple, à partir des informations mesurées par les capteurs 30 et 32, l'unité 28 calcule le déphasage entre les mouvements d'oscillations des bras 12 et 14 et asservit ce déphasage sur la valeur π/2.

Pour limiter l'énergie consommée par le microsystème 2 lors de son fonctionnement, l'unité 28 est elle-même alimentée à partir de l'énergie électrique produite par les transducteurs 22 et 24. A cet effet, par exemple, l'unité 28 est électriquement raccordée au dispositif 26 de stockage d'énergie électrique.

La figure 2 représente l'évolution au cours du temps des déplacements des bras 12 et 14, respectivement, le long des directions Y et X. Plus précisément, les courbes 44 et 46 représentent les déplacements, respectivement, des bras 12 et 14. Ces déplacements sont sinusoïdaux et déphasé l'un par rapport à l'autre de π/2 radians.

En régime stationnaire, chaque bras décrit un mouvement d'oscillations ou de va-et-vient entre deux positions extrêmes notées Xₘₐₓ et Xₘᵢₙ, pour le bras 14 et Yₘₐₓ et Yₘᵢₙ pour le bras 12 sur la figure 2.

Le déplacement des bras 12, 14 définit plusieurs poches de fluide qui se déplace circulairement de la buse 6 vers la buse 8 en augmentant de volume. Plus précisément, chaque poche de fluide se déplace en tournant autour de et, en même temps, en s'éloignant de la buse 6.

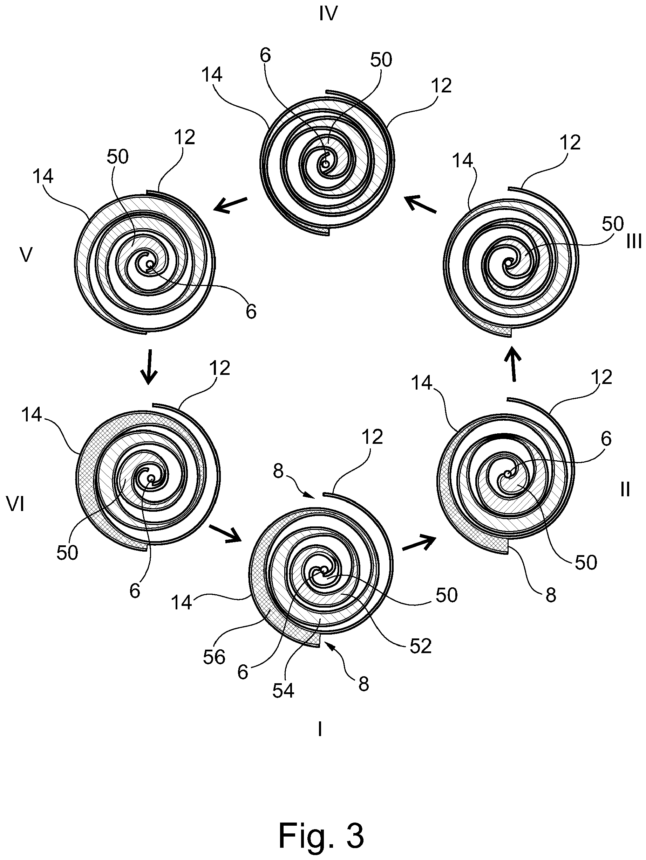

La figure 3 représente plus en détail le déplacement d'une poche 50 de fluide de la buse 6 vers la buse 8.

Initialement (état I), la poche 50 est en communication fluidique avec la buse 6. Cette poche 50 se remplit donc du fluide comprimé. Ensuite (état II), les bras 12 et 14 se déplacent l'un par rapport à l'autre pour isoler fluidiquement cette poche 50 de la buse 6.

Ensuite, comme l'illustrent les états successifs (état III à état VI), la poche 50 se déplace de la buse 6 vers la buse 8 en décrivant un mouvement de spirale autour de la buse 6. Plus précisément, après que les bras 12 et 14 aient chacun effectué un va-et-vient complet, la poche 50 est passée de la position représentée dans l'état I à la position 52 représentée dans l'état I. Elle a donc effectué un tour complet autour de la buse 6.

Ici, étant donné que les bras 12 et 14 en forme de spirale sont enroulés plusieurs fois autour de la buse 6, lors du prochain cycle d'oscillations des bras 12 et 14, la poche 50 effectue un nouveau tour autour de la buse 6 mais en s'éloignant un peu plus de celle-ci. Plus précisément, après un nouveau tour complet, la poche 50 occupe la position 54 (état I). Enfin, lors de son dernier tour, la poche 50 occupe la position 56 (état I). Dans l'état 56, la poche est en communication fluidique avec la buse 8, ce qui permet au fluide détendu de s'échapper.

Ici, les bras 12 et 14 sont conformés pour définir simultanément au moins deux poches qui se déplacent en même temps de la buse 6 vers la buse 8 en augmentant de volume. Dans le cas particulier représenté sur la figure 3, les bras 12 et 14 sont conformés pour définir six poches de fluide qui se déplacent simultanément de la buse 6 vers la buse 8.

On comprend donc que lorsque le fluide se détend dans le détendeur 10, l'énergie de cette détente est transformée en un déplacement mécanique des bras 12 et 14. Dans le cas particulier représenté sur la figure 1, ce déplacement mécanique est converti par les transducteurs 22 et 24 en énergie électrique.

La figure 4 représente un exemple d'implémentation possible du microsystème 2.

Par exemple, l'articulation 16 et le transducteur 22 sont identiques, à la position près, à l'articulation 18 et au transducteur 24. Ainsi, seuls l'articulation 16 et le transducteur 22 sont décrits ici plus en détail.

L'articulation 16 est ici réalisée à l'aide d'un parallélogramme 60 fixé sans aucun degré de liberté au bras 12. Ce parallélogramme 60 se déplace donc en translation le long de la direction Y parallèlement au plan 20. Le parallélogramme 60 est mécaniquement relié au plan 20 par l'intermédiaire de poutres 62. Chaque poutre 62 a une extrémité fixée sans aucun degré de liberté au parallélogramme 60 et une autre extrémité fixée au point d'ancrage 21 lui-même fixé sans aucun degré de liberté au plan 20. La poutre 62 n'est pas directement fixée au plan 20. De préférence, chaque poutre 62 est s'étend parallèlement à la direction X. De plus, chaque poutre 62 est suffisamment fine pour pouvoir se tordre lorsque le fluide se détend dans les poches définies entre les bras 12 et 14. Grâce à cette configuration, le bras 12 peut uniquement se déplacer le long de la direction Y.

Le transducteur 22 utilise par exemple un condensateur à capacité variable pour transformer l'énergie mécanique produite par le déplacement du bras 12 en énergie électrique. La conversion d'énergie mécanique en énergie électrique à l'aide de condensateurs variables est bien connue. Par exemple, celle-ci est utilisée dans les demandes de brevet WO2007 082 894 et FR2 897 486. Ainsi, ce mécanisme de conversion ne sera pas décrit en détail. Ici, le condensateur est réalisé à l'aide de peignes interdigités. Plus précisément, une armature 66 du condensateur est fixée sans aucun degré de liberté au parallélogramme 60. L'autre armature 68 de ce condensateur est fixée sans aucun degré de liberté sur le plan 20. Ainsi, lorsque le parallélogramme 60 se déplace, il modifie la capacité du condensateur, ce qui est ensuite exploité pour transformer l'énergie mécanique en énergie électrique. De préférence, au moins l'une des armatures du condensateur comporte des électrets. En effet, cela permet au transducteur 22 de commencer à produire de l'énergie électrique sans apport au préalable d'énergie électrique à partir d'une source d'énergie électrique extérieure.

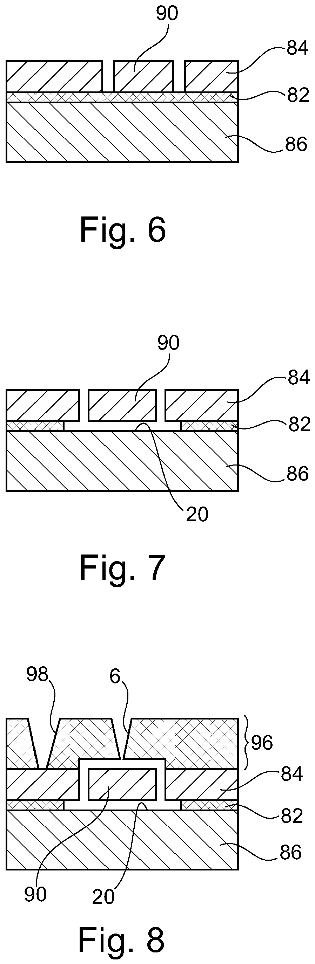

Un exemple de procédé de fabrication du microsystème 2 va maintenant être décrit en regard du procédé de la figure 5 et à l'aide des illustrations des figures 6 à 8.

Initialement, lors d'une étape 80, une plaque comportant une couche intermédiaire sacrificielle 82 est gravée. Typiquement, cette plaque est une plaque SOI (Silicone On Insulator). Ainsi, cette plaque comporte en plus de la couche sacrificielle 82 d'un côté une couche de silicium 84 et de l'autre côté une couche d'isolant 86. Lors de l'étape 80, les spirales, les articulations et le condensateur à capacité variable sont simultanément gravés dans la couche 84. Sur la figure 6, le microsystème ainsi gravé est représenté par un bloc 90. Le bloc 90 repose sur la couche 82.

Ensuite, lors d'une étape 92, on élimine la couche 82 située en dessous du bloc 90. Par exemple, une attaque chimique est utilisée pour éliminer la couche sacrificielle. A partir de ce moment, les spirales 12 et 14 et les parallélogrammes des articulations ainsi que les armatures 66 des condensateurs à capacité variable peuvent se déplacer en translation par rapport au plan 20 constitué par la face supérieure de la couche 86 (voir figure 7).

Ensuite, lors d'une étape 94, on réalise un capot 96 et on assemble ce capot au-dessus de la couche 84. Ce capot 96 constitue le plan supérieur destiné à confiner le fluide entre les bras 12, 14. Par exemple, le capot 96 est réalisé en verre. Les buses 6 et 8 sont réalisées dans ce capot 96. Seule, la buse 6 a été représentée sur la figure 8.

Des trous d'accès à la couche 84 sont également réalisés dans le capot 96 pour raccorder électriquement les transducteurs 22 et 24 à l'unité de commande 28 et au dispositif 26 de stockage d'énergie. Sur la figure 8, seul un trou 98 d'accès à la couche 84 a été représenté.

On notera que l'épaisseur de la couche 82 ainsi que l'espace entre le capot 96 et le bloc 90 ont été exagérés sur les figures 6 à 8 pour rendre visible le jeu qui existe entre les bras 12, 14 et, respectivement, le plan inférieur ou supérieur. En pratique, l'épaisseur de la couche 82 et l'espace entre le capot 96 et le bloc 90 sont suffisamment réduits pour que le fluide qui se détend dans le détendeur 10 reste confiné entre les bras 12 et 14.

Le microsystème 2 a de nombreuses applications possibles.

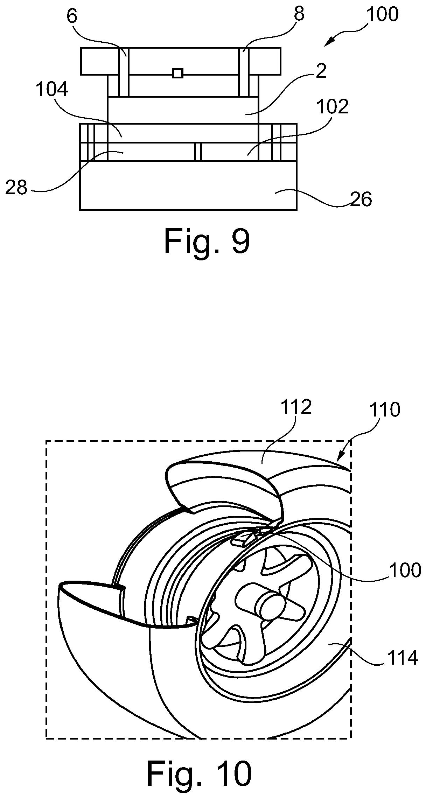

Par exemple, la figure 9 représente un capteur 100 de différence de pressions réalisé à partir du microsystème 2. En effet, la différence de pressions entre les buses 6 et 8 est proportionnelle à l'énergie mécanique produite par les déplacements des bras 12 et 14. De plus, étant donné que l'énergie électrique produite par les transducteurs 22 et 24 est proportionnelle à l'énergie mécanique reçue, cette énergie électrique est également proportionnelle à la différence de pressions entre les buses 6 et 8. C'est cette propriété du microsystème 2 qui est utilisée pour réaliser le capteur 100.

Le capteur 100 comporte le dispositif 26 de stockage d'énergie, l'unité de commande 28 et le microsystème 2. Il comporte de plus un circuit 102 de gestion de la charge et de la décharge du dispositif 26 et un émetteur radio 104 apte à communiquer une information représentative de la différence de pressions entre les buses 6 et 8 à un récepteur radio distant.

Par exemple, le circuit 100 déclenche l'envoi d'un signal caractéristique par l'intermédiaire de l'émetteur 104 dès que la charge du dispositif 26 dépasse un seuil prédéterminé F₁. Ainsi, le temps qui s'écoule entre deux émissions est proportionnel à la différence de pressions mesurée. Il est donc possible à partir des données reçues d'en déduire la différence de pressions entre les buses 6 et 8.

Ici, le seuil F₁ est fixé de manière à permettre l'alimentation de l'émetteur 104 pour que celui-ci émette l'impulsion caractéristique. Ainsi, dans ce mode de réalisation, le capteur 100 n'a pas besoin de source d'alimentation extérieure pour fonctionner. En effet, il utilise uniquement en tant que source d'énergie la différence de pressions qui existe entre les buses 6 et 8.

La figure 10 représente une roue 110 équipée du capteur 100. La roue 110 comporte un pneumatique ou pneu 112 à l'intérieur duquel est confiné de l'air comprimé. Ce pneumatique 112 est monté sur une jante 114. Le capteur 100 est placé à l'intérieur du pneumatique 112 qui lui sert d'enveloppe de protection.

Pour fonctionner, la buse 8 doit être fluidiquement raccordée à l'extérieur du pneumatique 112.

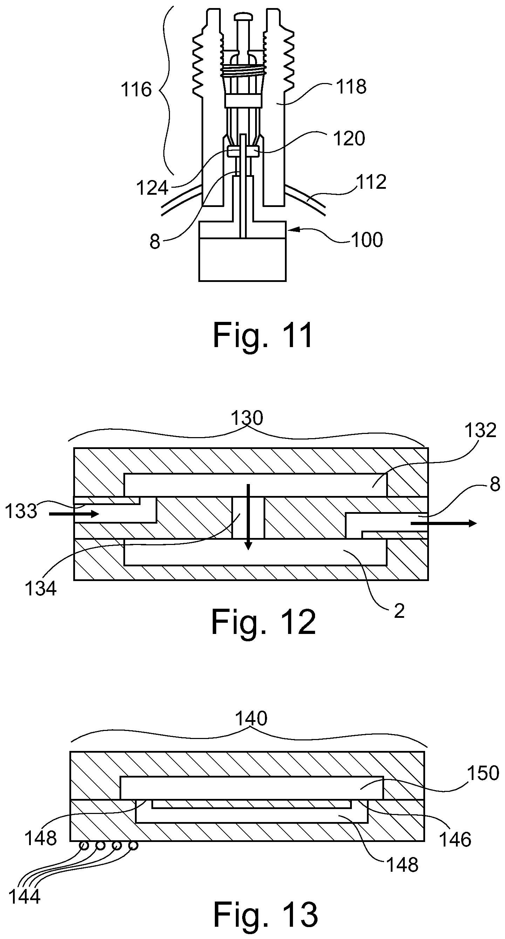

La figure 11 représente un exemple possible de montage du capteur 100 à l'intérieur du pneumatique 112 pour réaliser cela. Plus précisément, le pneumatique 112 comporte une valve 116 par l'intermédiaire de laquelle la roue 110 peut être gonflée. Classiquement, cette valve se compose d'un canon 118 fixé sans aucun degré de liberté au pneumatique 112 et d'une soupape mobile 120. Cette soupape 120 est déplaçable entre une position de repos dans laquelle elle scelle hermétiquement le pneumatique et une position active dans laquelle elle permet l'introduction d'air comprimé à l'intérieur du pneumatique 112.

Ici, un trou 124 est creusé à travers la soupape 120 pour permettre le passage de la buse 8 au travers de cette soupape 120 et ainsi la raccorder à l'air extérieur.

Dans ce mode de réalisation, le capteur 100 est fixé sans aucun degré de liberté à la soupape 120.

Ainsi, lorsque la soupape 120 est dans sa position de repos, l'air comprimé fuit par l'intermédiaire du capteur 100 et du trou 124. Le débit de la fuite d'air est très faible, c'est-à-dire inférieur à 1 mL/s. Par exemple, ici, le trou 124 est dimensionné de manière à permettre une fuite d'air uniquement inférieure à 100 µL/s et de préférence inférieure ou égale à 10 µL/s.

Avec un tel débit de 100 µL/s, la fuite réalisée au travers de la valve 120 représente pour un pneumatique dont le volume d'air est égal à 3,94 x 10⁻² m³ une baisse de pression de 8 mBar au bout de six mois, ce qui est négligeable. Ainsi, le capteur 100 est capable de fonctionner pendant plus de six mois sans pour autant imposer au propriétaire du véhicule de regonfler le pneumatique 110.

La figure 12 représente une pile à combustible 130 équipé d'un micromoteur incorporant le microsystème 2. Le micromoteur incorpore également un microsystème 132 de compression. Par exemple, ce microsystème 132 est identique au microsystème 2 à l'exception qu'il est commandé pour comprimer un fluide détendu admis par une buse 133. En effet, le fonctionnement du microsystème 2 est réversible. En particulier, dans ce mode de fonctionnement, les transducteurs 22 et 24 sont utilisés pour transformer de l'énergie électrique fournie, par exemple, à partir du dispositif 26 en des déplacements mécaniques des bras 12 et 14. Dans ces conditions, on veille également à ce que les déplacements en va-et-vient des bras 12 et 14 soient déphasés de π/2. Le fluide détendu est alors admis par la buse 133, correspondant à la buse 8, et le fluide comprimé est expulsé par la buse 6.

Le fluide comprimé par le microsystème 132 est expulsé dans une chambre 134 de combustion du micromoteur. Ici, le fluide comprimé est un mélange inflammable de carburant et de comburant. Dans la chambre 134, ce mélange inflammable explose, ce qui produit des gaz d'échappement encore plus comprimés. Les gaz d'échappement sont alors admis par l'intermédiaire de la buse 6 dans le microsystème 2 qui transforme la différence de pressions ainsi créée en un mouvement mécanique puis en énergie électrique. L'énergie électrique est alors utilisée pour alimenter une charge raccordée aux bornes de la pile à combustible. Cette charge n'a pas été représentée. Les gaz d'échappement détendus sont expulsés par l'intermédiaire de la buse 8.

La figure 13 représente une puce électronique 140 équipée de microcanaux 142 réalisés à l'intérieur du substrat qui supporte des composants électroniques 144 tels que des transistors. Les microcanaux 142 présentent une bouche d'entrée 146 et une bouche de sortie 148. Un fluide caloporteur 148 circule de la bouche 146 vers la bouche 148.

Dans ce mode de réalisation, un microsystème 150 de compression du fluide caloporteur est raccordé entre les bouches 146 et 148. Ce microsystème 150 est par exemple identique au microsystème 132.

Les microcanaux 142 forment un vase d'expansion ou détendeur de sorte que le fluide caloporteur comprimé expulsé par le microsystème 150 dans la bouche 146 se détend dans les microcanaux, ce qui permet de refroidir les composants électroniques. Ensuite, ce fluide caloporteur retourne dans le microsystème 150 par l'intermédiaire de la bouche 148 pour être de nouveau comprimé.

Ainsi, il est possible de refroidir efficacement et simplement la puce électronique 140.

De nombreux autres modes de réalisation sont possibles. Par exemple, les bras 12 et 14 peuvent être précontraints mécaniquement pour que, quelle que soit la position de ces bras, il existe toujours au moins une articulation élastique qui a une élongation non nulle, c'est-à-dire qu'elle n'est pas à sa position de repos.

De nombreuses formes de spirales différentes sont possibles pour les bras 12 et 14. Par exemple, il peut s'agir d'une volute ou d'une spirale d'Archimède. Chaque bras peut comporter une ou plusieurs spirales.

En variante, l'un des bras est fixé sans aucun degré de liberté sur le substrat et seul l'autre bras se déplace de manière à déplacer une ou plusieurs poches de fluides de façon identique à ce qui a été décrit en regard de la figure 3. Par exemple, le bras fixe est réalisé par gravure d'une couche déposée sur le substrat mais pas sur une couche sacrificielle comme c'est le cas pour le bras mobile.

D'autres modes de réalisation sont possibles pour les articulations 16 et 18. Par exemple, les articulations 16 et 18 peuvent être réalisées à l'aide d'une lame flexible, d'une rotule, d'un palier glissant ou autres et leur combinaison.

Le fluide comprimé peut être issu d'une combustion ou non. Dans ce dernier cas, le fluide comprimé peut être issu d'un réservoir de fluide comprimé. Par exemple, dans le mode de réalisation de la figure 12, le microsystème 132 et la chambre de combustion 134 sont remplacés par un réservoir de fluide comprimé. On obtient ainsi une pile générant de l'électricité à partir de la détente du fluide comprimé stocké dans le réservoir. De préférence, l'ensemble des composants des piles décrites ici sont logés dans un même boîtier à partir duquel font saillie les bornes de raccordement électrique à un circuit électrique extérieur. Typiquement, ce boîtier est amovible pour permettre un remplacement aisé de la pile dans le circuit électrique extérieur. Ces bornes sont donc aptes à coopérer avec des bornes électriques correspondantes du circuit électrique extérieur pour être électriquement connectées et, en alternance, déconnectées de ce circuit.

Il n'est pas nécessaire que les bras 12 et 14 soient montés en translation le long d'axes perpendiculaires. En fait, il suffit que les axes le long desquels se déplacent les bras 12 et 14 soient non parallèles. Si l'angle entre ces axes est différent de π/2 radians, alors le déphasage entre les mouvements d'oscillations des bras 12 et 14 doit être adapté en conséquence.

Il n'est pas non plus nécessaire que les bras 12 et 14 travaillent à la fréquence de résonance.

Dans un mode de réalisation simplifié, le déphaseur mécanique 36 peut être omis. Dans ce cas-là, le déphasage prédéterminé entre les mouvements des bras peut être assuré par un actionneur électrique tel que par exemple un transducteur électromécanique.

Le déphaseur mécanique peut également être réalisé sans avoir recours à un ressort. Par exemple, il peut être réalisé à l'aide d'un mécanisme de bielle et de manivelle.

Pour la transformation d'une différence de pressions en un déplacement mécanique, la conversion de l'énergie mécanique ainsi produite en énergie électrique est facultative. En effet, pour que le système 2 fonctionne, il suffit de disposer d'amortisseurs commandables permettant d'asservir les déplacements des bras 12 et 14 pour maintenir le déphasage approprié.

L'énergie électrique produite à partir des déplacements des bras 12 et 14 n'est pas nécessairement utilisée pour alimenter l'unité 28 ou d'autres composants électroniques associés tels que les composants du capteur 100.

De nombreux autres modes de fabrication du microsystème 2 sont possibles. En particulier, les étapes de gravure peuvent être remplacées par des étapes de dépôt. De même, l'utilisation d'une couche sacrificielle peut être omise. Dans ce cas, d'autres étapes permettant de fabriquer simultanément les deux bras imbriqués l'un dans l'autre sont mises en œuvre. Par exemple, les deux bras sont fabriqués en creusant dans un même substrat des fentes traversantes définissant ces bras et l'espace entre ces bras. Une extrémité de chaque bras est laissée fixée sur le substrat. Des plaques sont alors hermétiquement collées sur chaque face du substrat pour sceller la cavité dans laquelle le fluide se détend entre les bras ou est comprimé entre les bras.

Enfin, dans les modes de réalisation des capteurs, puces électroniques, micromoteurs et piles décrits ci-dessus, le microsystème 2 peut être remplacé par un autre microsystème de transformation d'une différence de pressions dans un fluide en un déplacement mécanique ou vice-versa. Par exemple, le microsystème 2 est remplacé par un microsystème comportant une turbine pour transformer la différence de pression en un déplacement mécanique, ce mode n'est pas couvert par les revendications.

## Revendications

1. Microsystème de transformation d'une différence de pressions dans un fluide en un déplacement mécanique, ce microsystème présentant des pièces usinées dont au moins une des dimensions est inférieure à 200 µm, ce microsystème comportant :
- une buse (6) d'entrée du fluide comprimé et une buse (8) de sortie du fluide détendu,
- un premier et un second bras (12, 14), dont au moins un est déplaçable, entre lesquels s'écoule le fluide pour passer de la buse d'entrée à la buse de sortie en déplaçant ces bras l'un par rapport à l'autre,
- un plan supérieur et un plan inférieur (20) entre lesquels sont interposés les bras, ces plans confinant entre ces bras le fluide qui s'écoule, **caractérisé en ce que** :
- les bras (12, 14) sont conformés de manière à ce que, au cours de leur déplacement l'un par rapport à l'autre, ils définissent au moins une poche (50) de fluide qui s'éloigne de la buse d'entrée pour ensuite rejoindre la buse de sortie tout en augmentant en même temps de volume,
- chacun des bras (12, 14) est mécaniquement relié au même plan inférieur fixe (20) selon un mode de réalisation choisi dans le groupe composé d'un premier et d'un second modes de réalisation, selon le premier mode de réalisation chacun des bras (12, 14) est mécaniquement relié au même plan inférieur fixe (20) par l'intermédiaire d'un moyen de déplacement (16, 18) permettant uniquement un déplacement de va-et-vient en translation de chaque bras parallèlement à ce plan inférieur et le long de directions non colinéaires et selon le second mode de réalisation le premier bras est fixé sans aucun degré de liberté sur le plan inférieur fixe (20) et le second bras est mécaniquement relié à ce plan inférieur fixe (20) par l'intermédiaire d'un moyen de déplacement permettant ledit déplacement, par rapport au premier bras, qui définit ladite au moins une poche de fluide qui s'éloigne de la buse d'entrée pour ensuite rejoindre la buse de sortie tout en augmentant en même temps de volume,
- le moyen de déplacement comporte un point d'ancrage (21) au plan inférieur fixe (20), et
- ledit au moins un bras (12, 14) déplaçable est apte à se déplacer par rapport à chacun des plans supérieur et inférieur.

2. Microsystème selon la revendication 1, dans lequel le microsystème comporte au moins un transducteur (22, 24) apte à convertir l'énergie mécanique produite par le déplacement dudit au moins un bras en une autre énergie.

3. Microsystème de compression d'un fluide, ce microsystème présentant des pièces usinées dont au moins une des dimensions est inférieure à 200 µm, ce microsystème comportant :
- une buse (8) d'entrée d'un fluide détendu et une buse (6) de sortie du fluide comprimé,
- un premier et un second bras (12, 14), dont au moins un est déplaçable, entre lesquels s'écoule le fluide pour passer de la buse d'entrée à la buse de sortie sous l'action d'un déplacement mécanique de ces bras l'un par rapport à l'autre,
- un plan supérieur et un plan inférieur (20) entre lesquels sont interposés les bras, ces plans confinant entre ces bras le fluide qui s'écoule,
- au moins un actionneur (22, 24) propre à déplacer ces bras l'un par rapport à l'autre,
**caractérisé en ce que** :
- les bras (12, 14) sont conformés et actionnés de manière à ce que, au cours de leur déplacement l'un par rapport à l'autre, ils définissent au moins une poche de fluide qui s'éloigne de la buse d'entrée pour ensuite rejoindre la buse de sortie tout en diminuant en même temps de volume,
- chacun des bras (12, 14) est mécaniquement relié au même plan inférieur fixe (20) selon un mode de réalisation choisi dans le groupe composé d'un premier et d'un second modes de réalisation, selon le premier mode de réalisation chacun des bras (12, 14) est mécaniquement relié au même plan inférieur fixe (20) par l'intermédiaire d'un moyen de déplacement (16, 18) permettant uniquement un déplacement de va-et-vient en translation de chaque bras parallèlement à ce plan inférieur et le long de directions non colinéaires et selon le second mode de réalisation le premier bras est fixé sans aucun degré de liberté sur le plan inférieur fixe (20) et le second bras est mécaniquement relié à ce plan inférieur fixe (20) par l'intermédiaire d'un moyen de déplacement permettant ledit déplacement, par rapport au premier bras, qui définit ladite au moins une poche de fluide qui s'éloigne de la buse d'entrée pour ensuite rejoindre la buse de sortie tout en diminuant en même temps de volume,
- le moyen de déplacement comporte un point d'ancrage (21) au plan inférieur fixe (20), et
- ledit au moins un bras (12, 14) déplaçable étant apte à se déplacer par rapport à chacun des plans supérieur et inférieur.

4. Microsystème selon l'une quelconque des revendications précédentes, dans lequel les bras (12, 14) sont conformés en spirales imbriquées l'une dans l'autre.

5. Microsystème selon l'une quelconque des revendications précédentes, dans lequel chacun des bras (12, 14) est mécaniquement relié au même plan inférieur fixe (20) selon le premier mode de réalisation.

6. Microsystème selon la revendication 5, dans lequel le microsystème comporte un déphaseur mécanique (36) interposé entre les deux bras pour introduire un déphasage entre les déplacements de va-et-vient de ces deux bras.

7. Microsystème selon l'une quelconque des revendications précédentes, dans lequel le microsystème comprend :
- au moins une liaison (38) entre les bras (12, 14) capable de transformer ces bras en un système résonant à une fréquence de résonance, et
- une unité (28) de commande du déplacement des bras l'un par rapport à l'autre apte à asservir la fréquence des mouvements de va-et-vient des bras sur la fréquence de résonance.

8. Microsystème selon la revendication 7, dans lequel la liaison (38) est un ressort dont chaque extrémité est mécaniquement raccordée à un des bras.

9. Microsystème selon l'une quelconque des revendications précédentes, dans lequel le premier et le second bras (12, 14) sont aptes à se déplacer par rapport à chacun des plans supérieur et inférieur.

10. Capteur d'une différence de pressions entre un fluide comprimé et un fluide détendu, **caractérisé en ce que** ce capteur comporte :
- un microsystème (2) conforme à l'une quelconque des revendications 1, 2, 4 à 9, dans lequel les buses (6, 8) d'entrée et de sortie sont fluidiquement raccordées aux fluides comprimé et détendu, et
- un transducteur (22, 24) apte à convertir l'énergie mécanique des déplacements des bras l'un par rapport à l'autre sous l'action du fluide qui se détend en s'écoulant de la buse d'entrée vers la buse de sortie, en une grandeur physique représentative de la différence de pressions.

11. Capteur selon la revendication 10, dans lequel le transducteur (22, 24) est un transducteur électromécanique propre à convertir l'énergie mécanique de déplacement des bras l'un par rapport à l'autre en énergie électrique utilisée en plus pour alimenter le capteur.

12. Puce électronique comportant :
- un réseau de microcanaux (142) dans lesquels circule un fluide caloporteur (148) compressible, ces microcanaux s'étendant entre une bouche (146) d'entrée et une bouche (148) de sortie dans l'épaisseur de la puce électronique pour la refroidir,
**caractérisée en ce que** la puce électronique comporte un microsystème (150) de compression conforme à l'une quelconque des revendications 3 à 9, dans lequel les buses (6, 8) de sortie et d'entrée sont fluidiquement raccordées, respectivement, aux bouches d'entrée et de sortie des microcanaux, ces microcanaux formant un détendeur.

13. Micromoteur à combustion comprenant :
- un canal (133) d'admission d'un mélange inflammable de carburant et de comburant, et
- au moins un microsystème (132, 2) de compression de ce mélange avant sa combustion ou de détende des gaz d'échappement résultant de la combustion de ce mélange,
**caractérisé en ce que** ce microsystème (132, 2) est conforme à l'une 0quelconque des revendications 1 à 9.

14. Pile à combustible comportant :
- un micromoteur propre à transformer la combustion d'un mélange de carburant et de comburant en un déplacement mécanique, et
- un transducteur électromécanique (22, 24) apte à convertir le déplacement mécanique en énergie électrique d'alimentation d'une charge électrique qui est raccordée à la pile,
**caractérisée en ce que** le micromoteur est conforme à la revendication 13.

15. Pile comportant :
- un réservoir de fluide comprimé,
- un microsystème (2) dans lequel des buses (6, 8) d'entrée et de sortie sont fluidiquement raccordées aux fluides comprimé et détendu, ce microsystème étant propre à transformer la détente du fluide comprimé en un déplacement mécanique, et
- un transducteur électromécanique (22, 24) apte à convertir le déplacement mécanique en énergie électrique d'alimentation d'une charge électrique qui est raccordée à la pile,
**caractérisée en ce que** le microsystème est conforme à l'une quelconque des revendications 1, 2 et 4 à 9.

16. Procédé de fabrication d'un microsystème conforme à l'une quelconque des revendications 1 à 9, **caractérisé en ce que** le procédé comporte le dépôt simultané sur un substrat ou la gravure simultanée dans un substrat (80) des bras imbriqués l'un dans l'autre.

## Patentansprüche

1. Mikrosystem zur Umwandlung einer Differenz von Drücken in einem Fluid in eine mechanische Verlagerung, wobei dieses Mikrosystem bearbeitete Teile aufweist, bei denen wenigstens eine der Abmessungen kleiner als 200 µm ist, wobei dieses Mikrosystem umfasst:
- eine Eintrittsdüse (6) für das komprimierte Fluid und eine Austrittsdüse (8) für das entspannte Fluid,
- einen ersten und einen zweiten Arm (12, 14), von denen wenigstens einer verlagerbar ist, zwischen denen das Fluid strömt, um von der Eintrittsdüse zur Austrittsdüse zu gelangen und dabei diese Arme relativ zueinander zu verlagern,
- eine obere Ebene und eine untere Ebene (20), zwischen denen die Arme angeordnet sind, wobei diese Ebenen zwischen diesen Armen das Fluid, welches strömt, einschließen,
**dadurch gekennzeichnet, dass**:
- die Arme (12, 14) derart ausgebildet sind, dass sie während ihrer Verlagerung relativ zueinander wenigstens eine Fluidtasche (50) definieren, welche sich von der Eintrittsdüse entfernt, um anschließend zur Austrittsdüse zu gelangen und dabei gleichzeitig ihr Volumen zu vergrößern,
- jeder der Arme (12, 14) mechanisch mit derselben festen unteren Ebene (20) gemäß einer Ausführungsform verbunden ist, die aus der Gruppe ausgewählt ist, die aus einer ersten und einer zweiten Ausführungsform besteht, wobei gemäß der ersten Ausführungsform jeder der Arme (12, 14) mechanisch mit derselben festen unteren Ebene (20) über ein Verlagerungsmittel (16, 18) verbunden ist, das ausschließlich eine hin- und hergehende translatorische Verlagerung jedes Armes parallel zu dieser unteren Ebene und entlang von nicht kollinearen Richtungen ermöglicht, und gemäß der zweiten Ausführungsform der erste Arm ohne jeden Freiheitsgrad auf der festen unteren Ebene (20) befestigt ist und der zweite Arm mit dieser festen unteren Ebene (20) mechanisch über ein Verlagerungsmittel verbunden ist, das die Verlagerung in Bezug auf den ersten Arm ermöglicht, welche die wenigstens eine Fluidtasche definiert, welche sich von der Eintrittsdüse entfernt, um anschließend zur Austrittsdüse zu gelangen und dabei gleichzeitig ihr Volumen zu vergrößern,
- das Verlagerungsmittel einen Verankerungspunkt (21) an der festen unteren Ebene (20) umfasst, und
- der wenigstens eine verlagerbare Arm (12, 14) in der Lage ist, sich in Bezug auf sowohl die obere als auch die untere Ebene zu verlagern.

2. Mikrosystem nach Anspruch 1, wobei das Mikrosystem wenigstens einen Wandler (22, 24) umfasst, der geeignet ist, die durch die Verlagerung des wenigstens einen Armes erzeugte mechanische Energie in eine andere Energie umzuwandeln.

3. Mikrosystem zur Kompression eines Fluids, wobei dieses Mikrosystem bearbeitete Teile aufweist, bei denen wenigstens eine der Abmessungen kleiner als 200 µm ist, wobei dieses Mikrosystem umfasst:
- eine Eintrittsdüse (8) für ein entspanntes Fluid und eine Austrittsdüse (6) für das komprimierte Fluid,
- einen ersten und einen zweiten Arm (12, 14), von denen wenigstens einer verlagerbar ist, zwischen denen das Fluid strömt, um unter der Wirkung einer mechanischen Verlagerung dieser Arme relativ zueinander von der Eintrittsdüse zur Austrittsdüse zu gelangen,
- eine obere Ebene und eine untere Ebene (20), zwischen denen die Arme angeordnet sind, wobei diese Ebenen zwischen diesen Armen das Fluid, welches strömt, einschließen,
- wenigstens einen Stellantrieb (22, 24), der dafür eingerichtet ist, diese Arme relativ zueinander zu verlagern,
**dadurch gekennzeichnet, dass**:
- die Arme (12, 14) derart ausgebildet sind und betätigt werden, dass sie während ihrer Verlagerung relativ zueinander wenigstens eine Fluidtasche definieren, welche sich von der Eintrittsdüse entfernt, um anschließend zur Austrittsdüse zu gelangen und dabei gleichzeitig ihr Volumen zu verkleinern,
- jeder der Arme (12, 14) mechanisch mit derselben festen unteren Ebene (20) gemäß einer Ausführungsform verbunden ist, die aus der Gruppe ausgewählt ist, die aus einer ersten und einer zweiten Ausführungsform besteht, wobei gemäß der ersten Ausführungsform jeder der Arme (12, 14) mechanisch mit derselben festen unteren Ebene (20) über ein Verlagerungsmittel (16, 18) verbunden ist, das ausschließlich eine hin- und hergehende translatorische Verlagerung jedes Armes parallel zu dieser unteren Ebene und entlang von nicht kollinearen Richtungen ermöglicht, und gemäß der zweiten Ausführungsform der erste Arm ohne jeden Freiheitsgrad auf der festen unteren Ebene (20) befestigt ist und der zweite Arm mit dieser festen unteren Ebene (20) mechanisch über ein Verlagerungsmittel verbunden ist, das die Verlagerung in Bezug auf den ersten Arm ermöglicht, welche die wenigstens eine Fluidtasche definiert, welche sich von der Eintrittsdüse entfernt, um anschließend zur Austrittsdüse zu gelangen und dabei gleichzeitig ihr Volumen zu verkleinern,
- das Verlagerungsmittel einen Verankerungspunkt (21) an der festen unteren Ebene (20) umfasst, und
- der wenigstens eine verlagerbare Arm (12, 14) in der Lage ist, sich in Bezug auf sowohl die obere als auch die untere Ebene zu verlagern.

4. Mikrosystem nach einem der vorhergehenden Ansprüche, wobei die Arme (12, 14) als ineinander verschlungene Spiralen ausgebildet sind.

5. Mikrosystem nach einem der vorhergehenden Ansprüche, wobei jeder der Arme (12, 14) mechanisch mit derselben festen unteren Ebene (20) gemäß der ersten Ausführungsform verbunden ist.

6. Mikrosystem nach Anspruch 5, wobei das Mikrosystem einen mechanischen Phasenschieber (36) umfasst, der zwischen den zwei Armen angeordnet ist, um eine Phasenverschiebung zwischen den hin- und hergehenden Bewegungen dieser zwei Arme zu bewirken.

7. Mikrosystem nach einem der vorhergehenden Ansprüche, wobei das Mikrosystem umfasst:
- wenigstens eine Verbindung (38) zwischen den Armen (12, 14), die in der Lage ist, diese Arme in ein bei einer Resonanzfrequenz resonantes System umzuwandeln, und
- eine Einheit (28) zur Steuerung der Verlagerung der Arme relativ zueinander, die geeignet ist, die Frequenz der hin- und hergehenden Bewegungen der Arme auf die Resonanzfrequenz zu regeln.

8. Mikrosystem nach Anspruch 7, wobei die Verbindung (38) eine Feder ist, von der jedes Ende mechanisch mit einem der Arme verbunden ist.

9. Mikrosystem nach einem der vorhergehenden Ansprüche, wobei der erste und der zweite Arm (12, 14) geeignet sind, sich in Bezug auf sowohl die obere als auch die untere Ebene zu verlagern.

10. Sensor für eine Druckdifferenz zwischen einem komprimierten Fluid und einem entspannten Fluid, **dadurch gekennzeichnet, dass** dieser Sensor umfasst:
- ein Mikrosystem (2) gemäß einem der Ansprüche 1, 2, 4 bis 9, wobei die Eintritts- und die Austrittsdüse (6, 8) mit dem komprimierten und dem entspannten Fluid in Fluidverbindung stehen, und
- einen Wandler (22, 24), der geeignet ist, die mechanische Energie der Verlagerungen der Arme relativ zueinander unter der Wirkung des Fluids, welches sich entspannt, indem es von der Eintrittsdüse zur Austrittsdüse strömt, in eine physikalische Größe umzuwandeln, die für die Druckdifferenz repräsentativ ist.

11. Sensor nach Anspruch 10, wobei der Wandler (22, 24) ein elektromechanischer Wandler ist, der dafür eingerichtet ist, die mechanische Energie der Verlagerung der Arme relativ zueinander in elektrische Energie umzuwandeln, die zusätzlich verwendet wird, um den Sensor zu versorgen.

12. Mikrochip, welcher umfasst:
- ein Netz von Mikrokanälen (142), in welchen ein komprimierbares Wärmeträgerfluid (148) zirkuliert, wobei sich diese Mikrokanäle zwischen einer Eintrittsöffnung (146) und einer Austrittsöffnung (148) in der Dicke des Mikrochips erstrecken, um ihn zu kühlen,
**dadurch gekennzeichnet, dass** der Mikrochip ein Mikrosystem (150) zur Kompression gemäß einem der Ansprüche 3 bis 9 umfasst, in welchem die Austritts- und die Eintrittsdüse (6, 8) mit der Eintritts- bzw. Austrittsöffnung der Mikrokanäle in Fluidverbindung stehen, wobei diese Mikrokanäle einen Druckminderer bilden.

13. Mikro-Verbrennungsmotor, welcher umfasst:
- einen Einlasskanal (133) für ein entzündbares Gemisch von Kraftstoff und Oxidationsmittel, und
- wenigstens ein Mikrosystem (132, 2) zur Kompression dieses Gemischs vor seiner Verbrennung oder zur Entspannung der Abgase, die aus der Verbrennung dieses Gemischs resultieren,
**dadurch gekennzeichnet, dass** das Mikrosystem (132, 2) einem der Ansprüche 1 bis 9 entspricht.

14. Brennstoffzelle, welche umfasst:
- einen Mikromotor, der dafür eingerichtet ist, die Verbrennung eines Gemischs von Kraftstoff und Oxidationsmittel in eine mechanische Verlagerung umzuwandeln, und
- einen elektromechanischen Wandler (22, 24), der geeignet ist, die mechanische Verlagerung in elektrische Energie zur Versorgung einer elektrischen Last umzuwandeln, die an die Brennstoffzelle angeschlossen ist,
**dadurch gekennzeichnet, dass** der Mikromotor Anspruch 13 entspricht.

15. Brennstoffzelle, welche umfasst:
- einen Behälter mit komprimiertem Fluid,
- ein Mikrosystem (2), in welchem eine Eintritts- und eine Austrittsdüse (6, 8) mit komprimiertem und entspanntem Fluid in Fluidverbindung stehen, wobei dieses Mikrosystem dafür eingerichtet ist, die Entspannung des komprimierten Fluids in eine mechanische Verlagerung umzuwandeln, und
- einen elektromechanischen Wandler (22, 24), der geeignet ist, die mechanische Verlagerung in elektrische Energie zur Versorgung einer elektrischen Last umzuwandeln, die an die Brennstoffzelle angeschlossen ist,
**dadurch gekennzeichnet, dass** das Mikrosystem einem der Ansprüche 1, 2 und 4 bis 9 entspricht.

16. Verfahren zur Herstellung eines Mikrosystems, das einem der Ansprüche 1 bis 9 entspricht, **dadurch gekennzeichnet, dass** das Verfahren die gleichzeitige Aufbringung oder die gleichzeitige Ätzung der ineinander verschlungenen Arme auf ein Substrat bzw. in ein Substrat (80) umfasst.

## Claims

1. Microsystem for converting a pressure difference in a fluid into a mechanical movement, this microsystem having machined components of which at least one of the dimensions is less than 200 µm, this microsystem comprising:
- an inlet nozzle (6) for the compressed fluid and an outlet nozzle (8) for the expanded fluid,
- a first and a second arm (12, 14), at least one of which is movable, between which the fluid flows in order to pass from the inlet nozzle to the outlet nozzle while moving these arms relative to one another,
- an upper plane and a lower plane (20) between which the arms are interposed, these planes confining the flowing fluid between these arms,
**characterized in that**:
- the arms (12, 14) are formed in such a manner that, in the course of their movement relative to one another, they define at least one pocket (50) of fluid moving away from the inlet nozzle in order subsequently to reach the outlet nozzle while increasing in volume at the same time,
- each of the arms (12, 14) is mechanically connected to the same fixed lower plane (20) according to one embodiment chosen from the group composed of a first embodiment and of a second embodiment, according to the first embodiment each of the arms (12, 14) is mechanically connected to the same fixed lower plane (20) by means of a movement means (16, 18) allowing only a to-and-fro translational movement of each arm parallel to this lower plane and along non-co-linear directions, and according to the second embodiment the first arm is fixed with no degree of freedom on the fixed lower plane (20) and the second arm is mechanically connected to this fixed lower plane (20) by means of a movement means allowing said movement, relative to the first arm, which defines said at least one pocket of fluid moving away from the inlet nozzle in order subsequently to reach the outlet nozzle while increasing in volume at the same time,
- the movement means comprises a point (21) of anchoring to the fixed lower plane (20), and
- said at least one movable arm (12, 14) is capable of moving relative to each of the upper and lower planes.

2. Microsystem according to Claim 1, wherein the microsystem comprises at least one transducer (22, 24) capable of converting the mechanical energy produced by the movement of said at least one arm into another energy type.

3. Microsystem for compression of a fluid, this microsystem having machined components of which at least one of the dimensions is less than 200 µm, this microsystem comprising:
- an inlet nozzle (8) for an expanded fluid and an outlet nozzle (6) for the compressed fluid,
- a first and a second arm (12, 14), at least one of which is movable, between which the fluid flows in order to pass from the inlet nozzle to the outlet nozzle through the action of a mechanical movement of these arms relative to one another,
- an upper plane and a lower plane (20) between which the arms are interposed, these planes confining the flowing fluid between these arms,
- at least one actuator (22, 24) capable of moving these arms relative to one another, **characterized in that**:
- the arms (12, 14) are formed and actuated in such a manner that, in the course of their movement relative to one another, they define at least one pocket of fluid moving away from the inlet nozzle in order subsequently to reach the outlet nozzle while reducing in volume at the same time,
- each of the arms (12, 14) is mechanically connected to the same fixed lower plane (20) according to one embodiment chosen from the group composed of a first embodiment and of a second embodiment, according to the first embodiment each of the arms (12, 14) is mechanically connected to the same fixed lower plane (20) by means of a movement means (16, 18) allowing only a to-and-fro translational movement of each arm parallel to this lower plane and along non-co-linear directions, and according to the second embodiment the first arm is fixed with no degree of freedom on the fixed lower plane (20) and the second arm is mechanically connected to this fixed lower plane (20) by means of a movement means allowing said movement, relative to the first arm, which defines said at least one pocket of fluid moving away from the inlet nozzle in order subsequently to reach the outlet nozzle while reducing in volume at the same time,
- the movement means comprises a point (21) of anchoring to the fixed lower plane (20), and
- said at least one movable arm (12, 14) being capable of moving relative to each of the upper and lower planes.

4. Microsystem according to any one of the preceding claims, wherein the arms (12, 14) are formed as mutually imbricated spirals.

5. Microsystem according to any one of the preceding claims, wherein each of the arms (12, 14) is mechanically connected to the same fixed lower plane (20) according to the first embodiment.

6. Microsystem according to Claim 5, wherein the microsystem comprises a mechanical phase shifter (36) interposed between the two arms in order to introduce a phase shift between the to-and-fro movements of these two arms.

7. Microsystem according to any one of the preceding claims, wherein the microsystem comprises:
- at least one link (38) between the arms (12, 14) capable of converting these arms into a system resonating at a resonance frequency, and
- a unit (28) for controlling the movement of the arms relative to one another capable of slaving the frequency of the to-and-fro movements of the arms to the resonance frequency.

8. Microsystem according to Claim 7, wherein the link (38) is a spring, each end of which is mechanically connected to one of the arms.

9. Microsystem according to any one of the preceding claims, wherein the first and the second arms (12, 14) are capable of moving relative to each of the upper and lower planes.

10. Device for sensing a pressure difference between a compressed fluid and an expanded fluid, **characterized in that** this sensing device comprises:
- a microsystem (2) according to any one of Claims 1, 2, 4 to 9, wherein the inlet and outlet nozzles (6, 8) are in fluid connection with the compressed and expanded fluids, and
- a transducer (22, 24) capable of converting the mechanical energy of the movements of the arms relative to one another through the action of the fluid that expands while flowing from the inlet nozzle towards the outlet nozzle into a physical quantity representative of the pressure difference.

11. Sensing device according to Claim 10, wherein the transducer (22, 24) is an electromechanical transducer capable of converting the mechanical energy of the movement of the arms relative to one another into electrical energy used in addition to supply the sensing device.

12. Electronic chip comprising:
- a network of microchannels (142) in which a compressible heat-transfer fluid (148) circulates, these microchannels extending between an inlet mouth (146) and an outlet mouth (148) in the thickness of the electronic chip such as to cool the latter,
**characterized in that** the electronic chip comprises a compression microsystem (150) according to any one of Claims 3 to 9, wherein the inlet and outlet nozzles (6, 8) are in fluid connection, respectively, with the inlet and outlet mouths of the microchannels, these microchannels forming a pressure reducer.

13. Micro-combustion engine, comprising:
- a channel (133) for the intake of a flammable mixture of fuel and oxidizer, and
- at least one microsystem (132, 2) for compression of this mixture prior to the combustion thereof or for expansion of the exhaust gases resulting from the combustion of this mixture,
**characterized in that** this microsystem (132, 2) is according to any one of Claims 1 to 9.

14. Fuel cell, comprising:
- a microengine capable of converting the combustion of a mixture of fuel and of oxidizer into a mechanical movement, and
- an electromechanical transducer (22, 24) capable of converting the mechanical movement into electrical energy for supplying an electric charge which is connected to the cell,
**characterized in that** the microengine is according to Claim 13.

15. Cell, comprising:
- a reservoir of compressed fluid,
- a microsystem (2) wherein inlet and outlet nozzles (6, 8) are in fluid connection with the compressed and expanded fluids, this microsystem being capable of converting the expansion of the compressed fluid into a mechanical movement, and
- an electromechanical transducer (22, 24) capable of converting the mechanical movement into electrical energy for supplying an electric charge which is connected to the cell,
**characterized in that** the microsystem is according to any one of Claims 1, 2 and 4 to 9.

16. Method for manufacturing a microsystem according to any one of Claims 1 to 9, **characterized in that** the method comprises the simultaneous deposition on a substrate or the simultaneous etching in a substrate (80) of the mutually imbricated arms.
